# EUROPEAN PATENT APPLICATION

(11) **EP 2 589 431 A1**
(43) Date of publication of application: **08.05.2013**
(21) Application number: 11188049.8
(22) Date of filing: 07.11.2011
(51) Int. Cl.: B01J 23/20, B01J 21/06, B01J 23/44, B01J 23/52, B01J 35/00, B01J 37/02, B01J 37/03, C01B 15/029

(54) **A catalyst for direct synthesis of hydrogen peroxide**

(71) Applicant: SOLVAY SA, 1120 Bruxelles (BE)
(72) Inventor: Desmedt, Frédérique, 1050 Brussels (BE)
(74) Representative: Vande Gucht, Anne

(57) **Abstract**

The present invention provides a catalyst comprising : a gold or platinum group metal, and a carrier containing niobium oxide, and an oxide other than niobium oxide, as well as its use in production of hydrogen peroxide. The invention also relates to a process for producing hydrogen peroxide, comprising reacting hydrogen and oxygen in the presence of the catalyst according to the invention in a reactor, and a process for producing the catalyst according the invention.

## Description

### Technical Field

This invention is related to a catalyst comprising : a gold or platinum group metal, and a carrier containing niobium oxide, and an oxide other than niobium oxide, as well as a process for producing the catalyst of the invention. The invention also relates to its use in production of hydrogen peroxide and a process for producing hydrogen peroxide, comprising reacting hydrogen and oxygen in the presence of the catalyst according to the invention.

### State of the Art

Hydrogen peroxide is a highly important commercial product widely used as a bleaching agent in the textile or paper manufacturing industry, a disinfecting agent and basic product in the chemical industry and in the peroxide compound production reactions (sodium perborate, sodium percarbonate, metallic peroxides or percarboxyl acids), oxidation (amine oxide manufacture), epoxidation and hydroxylation (plasticizing and stabilizing agent manufacture). Commercially, the most common method to produce hydrogen peroxide is the "anthraquinone" process. In this process, hydrogen and oxygen react to form hydrogen peroxide by the alternate oxidation and reduction of alkylated anthraquinones in organic solvents. A significant disadvantage of this process is that it is costly and produces a significant amount of by-products that must be removed from the process.

One highly attractive alternative to the anthraquinone process is the production of hydrogen peroxide directly by reacting hydrogen and oxygen in the presence of metal catalysts supported on various oxides such as silica as a catalyst carrier.

However, in these processes, when a catalyst based on silica as carrier is used for the direct synthesis of hydrogen peroxide, the reaction product, i.e., hydrogen peroxide was not efficiently produced since the production of water as a by-product was very high and even higher than the hydrogen peroxide production after a certain period of time. To prevent these drawbacks, alternative processes with niobium oxide (Nb₂O₅) or Nb₂O₅.H₂O, which is also called niobic acid, instead of silica have been proposed (Pham, Hien N., et al., Applied catalysis A : General 397(2011) pp.153-162). Those supported onto the niobic acid-based carriers for the direct synthesis of hydrogen peroxide are more selective because of the acidity of their surface which could stabilize the hydrogen peroxide produced but the hydrogen peroxide production remains very low and the final concentration in hydrogen peroxide is still low. Another alternative (US 2007/0142651 A1) is the use of a catalyst comprising a polymer-encapsulated combination of noble metal and ion exchange resin. However, those processes still do not exhibit sufficiently high productivity and selectivity for producing hydrogen peroxide, and in consequence there have been demands for a novel catalyst which does not exhibit such disadvantages.

### Detailed Description of the Invention

The expression "carrier" intends herein to denote the material, usually a solid with a high surface area, to which a catalytic compound is affixed and the carrier may be inert or participate in the catalytic reactions.

The expression "niobium oxide" intends herein to refer to oxide compounds of niobium such as niobium monoxide (NbO), niobium dioxide (NbO₂), niobium pentoxide (Nb₂O₅), etc.

The object of the invention is to provide a catalyst for producing hydrogen peroxide from hydrogen and oxygen which does not present the above disadvantages and which enables to efficiently obtain hydrogen peroxide. Another object of the invention is to provide a process for producing the catalyst of the invention, and to provide an efficient process for producing hydrogen peroxide using the catalyst of the invention.

The present invention therefore relates to a catalyst comprising a gold or platinum group metal or a mixture thereof, and a carrier containing oxides including niobium oxide, wherein the carrier contains more than 5 wt. % of an oxide other than niobium oxide, based on the total weight of the oxides. The present invention is also directed to its use in production of hydrogen peroxide, a process for producing hydrogen peroxide, comprising : reacting hydrogen and oxygen in the presence of the catalyst of the invention in a reactor, as well as a process for producing the catalyst of the invention.

The inventors have surprisingly discovered that by using a catalyst comprising a carrier based on a combination of niobium oxide, and an oxide other than niobium oxide such as silica, both high-productivity and selectivity are obtained in the direct reaction between hydrogen and oxygen.

Therefore, in accordance with a first aspect of the present invention, a catalyst is provided to obtain hydrogen peroxide comprised of a gold or platinum group metal or a mixture thereof, and a carrier containing oxides including niobium oxide, wherein the carrier contains more than 5 wt. % of an oxide other than niobium oxide, based on the total weight of the oxides.

In one preferred embodiment of the present invention, the catalyst comprises at least one metal selected from among the gold or platinum group comprised of ruthenium, rhodium, palladium, osmium, iridium, platinum, silver, gold, or any combination of these metals. In a more preferred embodiment, the catalyst comprises a palladium metal or a combination of palladium with another metal (for example, platinum or gold).

The amount of gold or platinum group metal supported on the carrier can vary in a broad range, but be preferably comprised from 0.001 to 10 wt. %, more preferably from 0.1 to 5 wt. % and most preferably from 0.5 to 3 wt. %, each based on the weight of the carrier. The addition of the metal to the carrier can be performed using any of the known preparation techniques of supported metal catalyst, e.g. impregnation, adsorption, ionic exchange, etc. For the impregnation, it is possible to use any kind of inorganic or organic salt of the metal to be impregnated that is soluble in the solvent used. Suitable salts are for example halides such as chloride, acetate, nitrate, oxalate, etc.

One of the essential features of the present invention resides in the use of a combination of niobium oxide, and an oxide other than niobium oxide such as silica as a carrier along with a gold or platinum group metal to achieve the purpose of the invention. It has indeed been found that by using the catalyst according to the invention hydrogen peroxide is efficiently obtained, with improved productivity and selectivity towards the reaction product which is hydrogen peroxide. Moreover, this selectivity remains stable even at a high concentration of hydrogen peroxide, for example higher than 10 % by weight and it remains quite stable during the entire process.

The oxide other than niobium oxide may be any oxide known in the art but preferably is selected from a group consisting of silica, alumina, titanium oxide, barium oxide, zirconium oxide, and mixtures thereof. In a preferred embodiment, the oxide other than niobium oxide comprises silica, and the carrier comprises silica doped by niobium ions. The presence of niobium oxide such as Nb₂O₅ is preferred since it reduces the production of a side product such as water during the H₂O₂ direct synthesis.

In specific embodiments of the present invention, the amount of the oxide other than niobium oxide in the carrier ranges from 30 to 99 wt. %, more preferably from 50 to 98 wt. % and most preferably from 70 to 95 wt. %, each based on the total weight of the oxides.

The preparation of the carrier containing niobium oxide, and an oxide other than niobium oxide may be accomplished by a variety of techniques known in the art. One such method involves impregnating an oxide other than niobium oxide with a niobium compound (e.g., Nb(OCH₂CH₃)₅), optionally followed by drying. The niobium compounds include any suitable niobium halide, niobium alkoxide, or niobium halide alkoxide (such as NbCl₃(OCH₂CH₃)₂). In another technique, the mixture is suitably prepared by calcining a mixture of niobium oxide, and an oxide other than niobium oxide at an elevated temperature, for example at 500 °C to 1000 °C. Alternatively, the carrier is prepared by cogelling a mixture of a niobium salt and a sol of an oxide other than niobium oxide by conventional methods of preparing metal supported catalyst compositions. Other techniques for incorporating an oxide or hydroxide of niobium on an oxide other than niobium oxide such as dry-mixing, co-precipitation, impregnation and ionexchange are also suitably employed. In preferred embodiments niobium oxide (Nb₂O₅) is precipitated onto silica to form a mixture of those metal oxides.

These oxides can essentially be amorphous like a silica gel or can be comprised of an orderly structure of mesopores, such as, for example, of types including MCM-41, MCM-48, SBA-15, among others or a crystalline structure, like a zeolite.

The gold or platinum group metal used in the invention may be deposited by various ways known in the art. For example, the gold or platinum group metal can be deposited by dipping the carrier to a solution of halides of the gold or platinum group metal followed by reduction. In more specific embodiments, the reduction is carried out in the presence of a reducing agent, preferably gaseous hydrogen at high temperature.

The catalyst according to the invention has a large specific surface area measured by the BET method, generally greater than 20 m²/g, preferably greater than 100 m²/g. Moreover, the catalyst can essentially have an amorphous structure. In particular the niobium oxide and/or the oxide other than niobium oxide can have an amorphous structure. Preferably, the niobium oxide and the oxide other than niobium oxide can have an amorphous structure.

In the second aspect of this invention, the invention is also directed to the use of the catalyst according to the invention in production of hydrogen peroxide. In the process of the invention, hydrogen and oxygen (as purified oxygen or air) are reacted continuously over a catalyst in the presence of a liquid solvent in a reactor to generate a liquid solution of hydrogen peroxide. The catalyst is then used for the direct synthesis of hydrogen peroxide in a three phase's system : the catalyst (solid) is put in a solvent (water or alcohol) and the gases (H₂, O₂ and an inert gas) are bubbled in the suspension in presence of stabilizing additives (halides and / or inorganic acid).

In the third aspect of the invention, a process for producing hydrogen peroxide, comprising : reacting hydrogen and oxygen in the presence of the catalyst according to the invention in a reactor, is provided. The process of this invention can be carried out in continuous, semi-continuous or discontinuous mode, by the conventional methods, for example, in a stirred tank reactor with the catalyst particles in suspension, in a basket-type stirred tank reactor, etc. Once the reaction has reached the desired conversion levels, the catalyst can be separated by different known processes, such as, for example, by filtration if the catalyst in suspension is used, which would afford the possibility of its subsequent reuse. In this case the amount of catalyst used is that necessary to obtain a concentration 0.01 to 10 wt. % regarding the solvent and preferably being 0.1 to 5 wt. %. The concentration of the obtained hydrogen peroxide according to the invention is generally higher than 5 wt. %, preferably higher than 8 wt. %, most preferably higher than 13 wt. %.

In the last aspect of the invention, the invention relates to a process for producing the catalyst of the invention, comprising : (i) adding to an oxide other than niobium oxide a precursor of niobium oxide to form a homogeneous mixture, (ii) converting the precursor of niobium oxide to niobium oxide to produce a carrier, and (iii) depositing a gold or platinum group metal or a mixture thereof onto the carrier.

In preferred embodiment, the precursor of niobium oxide is an alkoxylate of niobium, preferably niobium ethoxide. The precursor is converted, for example after hydrolysis, to niobium oxide, which can be precipitated onto the support of an oxide other than niobium oxide to produce a carrier. A gold or platinum group metal such as palladium which acts as active material in the direct synthesis of hydrogen peroxide is deposited on these oxides of niobium.

Throughout the description and the claims, the word "comprises" and the variations thereon do not intend to exclude other technical features, additives, components or steps. For the experts in this field, other objects, advantages and characteristics of the invention will be inferred in part from the description and in part from the embodiment of the invention. The following examples are provided for illustrative purposes and are not intended to be limiting of the present invention.

### EXAMPLES

### Example 1

Silica was dried overnight at 160°C in an oven. In a three necks flask, equipped with nitrogen flushing, 300 mL of dried n-hexane (Aldrich, of purity >99 %) and 6.23 g of niobium ethoxide (Nb(OC₂H₅)₅ (Aldrich, 99.95 %)) were introduced. The suspension was maintained under mechanical stirring at room temperature. 19.69 g of dried silica were introduced in the flask and maintained under stirring during three hours. The solvent was evaporated under vacuum using a rotary evaporator. 100 mL of demineralized water were added to the solid. 20 mL of a solution of nitric acid 0.5M were added to the suspension slowly. The carrier was aged overnight at room temperature, and then it was dried under vacuum with a rotary evaporator. The carrier was washed with demineralized water and dried for 24 hours at 160°C.

A sample of 12.23 g of the carrier was taken for the catalyst preparation. In 12 ml of demineralized water, 0.4070 g of palladium chloride was introduced. Some drops of HCl 35 wt. % aqueous solution were added to the mixture to help the dissolution and the medium was heated at 50°C under magnetic stirring until all the salt was dissolved. The solution was added to the carrier and was well mixed until all the liquid phase was adsorbed by the carrier. The obtained catalyst was dried overnight at 95°C for 24 hours. Palladium was reduced under influence of a mixture of hydrogen and nitrogen at 175°C during 20 hours.

### Example 2

A catalyst was prepared as Example 1, except that 6.93 g of niobium ethoxide and 20 g of SiO₂ were used.

The surface area of silica, which was determined by BET, was 316 m²/g and the silica had an amorphous structure. The diameter of the particles determined by a scanning electron microscope(SEM) was around 200 micrometer. The catalyst had a surface area of 316 m²/g, which was determined by BET, and exhibited amorphous structure. The diameter of the particles determined by SEM was between 80 and 250 micrometer. The Nb content was determined and reached 10 wt. %. The Pd content was determined by inductively coupled plasma optical emission spectrometry (ICP-OES) and reached 2.0 wt. %.

### Comparative Example 1

1 g of a solution of palladium chloride (19.9 wt. % in Pd) was diluted in 19 g of demineralized water. The solution was put in contact with 20 g of silica. The obtained catalyst was dried overnight at 75°C. Palladium was reduced under influence of a mixture of hydrogen and nitrogen at 125°C during 8 hours. Pd content was determined by ICP-OES and reached 0.91 wt. %.

### Comparative Example 2

A catalyst containing 2 wt. % Pd on niobic acid was obtained by an external source.

### Example 3

In a 380 mL Hastelloy B22 reactor, methanol (220 g), hydrogen bromide (35ppm) and 2.06 g of a catalyst obtained in Examples 1 and 2 and Comparative Examples 1 and 2 were introduced. The reactor was cooled to 5°C and the working pressure was at 50 bars (obtained by introduction of nitrogen). The reactor was flushed all the time of the reaction with the mixture of gases : hydrogen (3.6 % Mol) / oxygen (25.0 % Mol) / nitrogen (71.4 % Mol). The total flow was 2567 mlN/min.

When the gas phase out was stable (GC on line), the mechanical stirrer was started at 1200 or 1500 rpm. Gas Chromatography (GC) on line analyzed every 10 minutes the gas phase out. Liquid samples were taken to measure hydrogen peroxide and water concentration. Hydrogen peroxide was measured by redox titration with cerium sulfate. Water was measured by the Karl-Fisher titration method. The results are summarized Table 1.

**Table 1**

| | Catalyst of Example 1 | | Catalyst of Example 2 | Catalyst of Comp. Example 1 | Catalyst of Comp. Example 2 |
|---|---|---|---|---|---|
| Methanol (g) | 220.01 | 220.01 | 220.05 | 150.49 | 150.25 |
| HBr (ppm) | 34.9 | 34.9 | 34.9 | 51 | 20 |
| Catalyst (g) | 2.0614 | 2.0614 | 2.059 | 2.6675 | 0.8835 |
| Hydrogen (mol. %) | 3.6 | 3.6 | 3.6 | 3.5 | 3.5 |
| Oxygen (mol. %) | 25.0 | 25.0 | 25.0 | 35.1 | 35.1 |
| Nitrogen(mol. %) | 71.4 | 71.4 | 71.4 | 61.4 | 61.4 |
| Speed(rpm) | 1200 | 1200 | 1200 | 1500 | 1500 |
| Contact time (min) | 390 | 720 | 420 | 225 | 240 |
| Hydrogen peroxide fin (wt. %) | 9.69 | 13.45 | 7.98 | 2.88 | 0.97 |
| Water fin (wt. %) | 1.62 | 3.25 | 3.83 | 5.31 | 0.68 |
| Conversion fin (%) | 58.2 | 44.0 | 51.2 | 46.0 | 6.3 |
| Selectivity fin (%) | 76.1 | 68.7 | 52.5 | 22.6 | 43.5 |
| Productivity fin (mol H₂O₂/(kg of Pd*h)) | 2339 | 1762 | 1792 | 1426 | 611 |

Although this invention has been described broadly and also identifies specific preferred embodiments, it will be understood that modifications and variations may be made within the scope of the invention as defined by the following claims.

## Claims

1. A catalyst comprising :
a gold or platinum group metal or a mixture thereof, and
a carrier containing oxides including niobium oxide,
wherein the carrier contains more than 5 wt. % of an oxide other than niobium oxide, based on the total weight of the oxides.

2. The catalyst according to Claim 1, wherein the gold or platinum group metal is a platinum group metal, preferably palladium or a combination of palladium with another metal.

3. The catalyst according to Claim 1 or 2, wherein the carrier contains from 30 to 99 wt. %, more preferably from 50 to 98 wt. % and most preferably from 70 to 95 wt. % of the oxide other than niobium oxide, each based on the total weight of the oxides.

4. The catalyst according to any one of Claims 1-3, wherein the oxide other than niobium oxide is selected from the group consisting of silica, alumina, titanium oxide, barium oxide, zirconium oxide, and mixtures thereof.

5. The catalyst according to Claim 4, wherein the oxide other than niobium oxide comprises silica.

6. The catalyst according to any one of Claims 1-5, wherein the niobium oxide is precipitated onto the oxide other than niobium oxide.

7. The catalyst according to any one of Claims 1-6, wherein the gold or platinum group metal is present in an amount of from 0.001 to 10 wt. %, preferably from 0.1 to 5 wt. %, most preferably from 0.5 to 3 wt. %, each based on the weight of the carrier.

8. The catalyst according to any one of Claims 1-7, being obtainable by depositing the gold or platinum group metal by dipping the carrier to a solution of halides of the gold or platinum group metal followed by reduction.

9. The catalyst according to Claim 8, wherein the reduction is carried out in the presence of a reducing agent, preferably gaseous hydrogen.

10. The catalyst according to any one of Claims 1-9, wherein the carrier has an amorphous structure.

11. The catalyst according to any one of Claims 1-10, wherein the catalyst exhibits a BET value of greater than 20 m²/g, preferably greater than 100 m²/g.

12. Use of the catalyst according to any one of Claims 1-11 in production of hydrogen peroxide.

13. Process for producing hydrogen peroxide, comprising :
reacting hydrogen and oxygen in the presence of the catalyst according to any one of Claims 1 to 11 in a reactor.

14. Process for producing the catalyst according to any one of Claims 1 to 11, comprising :
(i) adding to an oxide other than niobium oxide a precursor of niobium oxide to form a homogeneous mixture,
(ii) converting the precursor of niobium oxide to niobium oxide to produce a carrier, and
(iii) depositing a gold or platinum group metal onto the carrier.

15. Process for producing the catalyst according to Claim 14, wherein the precursor of a niobium oxide is an alkoxylate of niobium, preferably niobium ethoxide.
